# EUROPEAN PATENT SPECIFICATION

(11) **EP 3 324 261 B1**
(45) Date of publication and mention of the grant of the patent: **24.05.2023**
(21) Application number: 17201833.5
(22) Date of filing: 15.11.2017
(51) Int. Cl.: G05D 1/02, A01D 34/00

(54) **AUTOMATIC LAWN MOWER ROBOT AND CONTROLLING METHOD ASSOCIATED**
AUTOMATISCHER RASENMÄHERROBOTER UND ZUGEHÖRIGES STEUERUNGSVERFAHREN
ROBOT AUTOMATIQUE DE TONDEUSE ET PROCÉDÉ DE COMMANDE ASSOCIÉ

(30) Priority: 17.11.2016 IT 201600116383
(43) Date of publication of application: 23.05.2018
(73) Proprietor: Bernini, Fabrizio, 52021 Bucine - Arezzo (IT)
(72) Inventor: Bernini, Fabrizio, 52021 Bucine - Arezzo (IT)
(74) Representative: Fabbriciani, Simone

(56) References cited:
- EP-A1- 2 342 964
- US-A1- 2011 112 730

## Description

This invention relates to an electronic system and the method for automatically controlling a plurality of lawn mower robots according to it.

Automatic lawn mower robots are prior art devices designed to cut grass without continuous control by the user. Automatic lawn mower robots have become widespread in substantially recent times, following the need to cut large areas of grass autonomously, so that user can dedicate him/herself to other activities without losing time continuously checking a lawn mower, for example with motor-driven tractors, since these activities are very time-consuming and, at the same time, not very remunerative. Substantially, therefore, the automatic lawn mower robots have allowed the movement of the intelligence of the user towards activities other than the traditional lawn mowing. Examples of similar lawn mower robots can be found in document EP 2 342 964 and US 2011 112730.

It has been noted that in the case of large lawns it is worthwhile using, either simultaneously or in sequence, more than one automatic lawn mower robot. It has been noted that if more than one automatic lawn mower is used they often pass over areas of the lawn which have already been cut; this causes a considerable waste of resources, because the battery of the automatic lawn mower is discharged unnecessarily by operating both the cutting motor and the movement motor for an area which was already been cut. This drawback is even more pronounced with a large number of lawn mowers.

The aim of this invention is to provide an automatic lawn mower which overcomes the above-mentioned drawbacks.

Another aim of this invention is to illustrate a method for coordinating more than one automatic lawn mower, which overcomes the above-mentioned drawbacks.

Another aim of this invention is to provide an electronic system which overcomes the above-mentioned drawbacks.

The invention describes an electronic system and a method for automatically controlling a plurality of lawn mowers robots which makes it possible to optimise the lawn cutting strategy in a predetermined area.

These and other aims are obtained with the electronic system according to claim 1 comprising a remote memory unit and a plurality of lawn mower robots remotely accessing the remote memory unit, each lawn mower robot comprising:
- at least one electric motor designed to allow the movement of the robot in a substantially automatic manner;
- grass cutting means, positioned in a position substantially in contact in use with a turf to be cut; and
- a plurality of sensors comprising:
   contact or proximity sensors fixed on the body of the lawn mower robot and designed to identify the presence of obstacles around the lawn mower robot, and
- shear force sensors, installed on the electric motor arranged to measure the effort exerted by the electric motor and allow density and/or height of the lawn to be known;
- a localisation module, allowing the geographical localisation of the lawn mower robot inside an area by the acquisition of position data, the localisation module being electronically interfaced with the at least one motor and selectively controlling the switching ON and OFF of the electric motor; and
- moisture and/or temperature sensor means arranged to measure ambient temperature and moisture data; and
- a data transceiver module, designed to allow the sending of ambient data, wherein the ambient data comprises obstacle, ambient temperature and moisture data and position data acquired electronically by said plurality sensors and the localisation module, towards the remote memory unit;

and wherein the remote memory unit comprises with means to compute a movement strategy for moving the plurality of lawn mower robots;
wherein the movement strategy is defined at least according to combined parameters stored in the remote memory unit and the ambient data and the
position data acquired autonomously by each of according to a position datum adopted by the lawn mower robot in the area;
wherein the movement strategy is automatically updated over time according to the plurality of parameters, and automatically re-transmitted towards the plurality of lawn mower robots.

According to a first characteristic aspect of the invention, the extension and/or the coordinates of at least part of the perimeter of the area is previously stored in the remote memory unit in the electronic system.

According to a first characteristic aspect of the invention, inhibiting areas inside the perimeter of the area are stored in the remote memory unit, the inhibiting areas being:
- loaded in the remote memory manually, and/or
- progressively stored in accordance with the plurality of ambient data.

According to a first characteristic aspect of the invention, the movement strategy is automatically updated over time according to the plurality of parameters, and automatically re-transmitted towards the plurality of lawn mower robots.

According to a first characteristic aspect of the invention, the plurality of sensors measures data of a heterogeneous type used together for redefining over time the movement strategy.

According to another characteristic aspect of the invention, the movement strategy is variable over time.

More specifically, the localisation module comprises satellite global positioning means, and wherein the ambient data comprise global positioning data comprising global latitude and longitude data.

According to another characteristic aspect of the invention, the sensor means also comprise a stereoscopic video camera.

According to another characteristic aspect of the invention, the sensor means comprise moisture and/or temperature sensors.

Moreover, the invention describes a method for automatically controlling a plurality of lawn mower robots inside an area according to claim 8.

According to another characteristic aspect of the invention, the combined parameters in the method comprise at least one definition of at least one inhibiting sub-area within the perimeter of the area, and wherein the at least one inhibiting sub-area is loaded in the remote memory with:
- a step for manual definition by the user using an electronic device electronically accessing the memory unit; and/or
- a step of progressive storage in accordance with the plurality of ambient data.

According to a further characteristic aspect of the invention, the method comprises a step of automatic updating of the movement strategy according to the plurality of parameters, and a step for transmitting the updated movement strategy towards the plurality of lawn mower robots.

According to another characteristic aspect of the invention, the plurality of sensors in the method measures data of a heterogeneous type used together for redefining over time the movement strategy.

The above-mentioned and other characteristics of the invention will be described with reference to the following detailed description of the invention, which is a preferred, non-limiting embodiment of the invention, with reference to the accompanying drawings, in which:
- Figure 1 is a view of an automatic lawn mower according to the invention;
- Figure 2 is a schematic top view of an area in which there is a plurality of lawn mowers such as that of Figure 1;

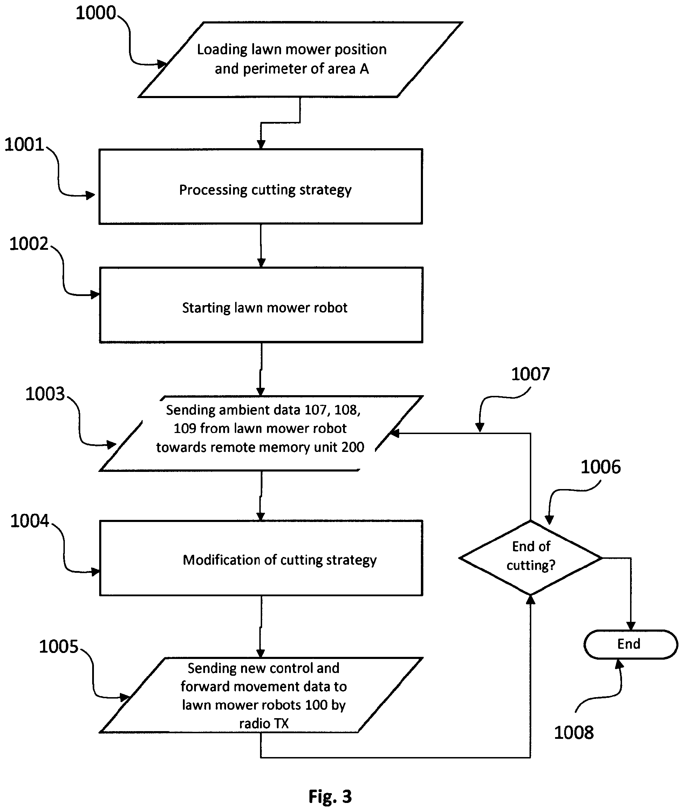

- Figure 3 illustrates a detail of a method for controlling the lawn mower of Figure 1 in the context of the area of Figure 2.

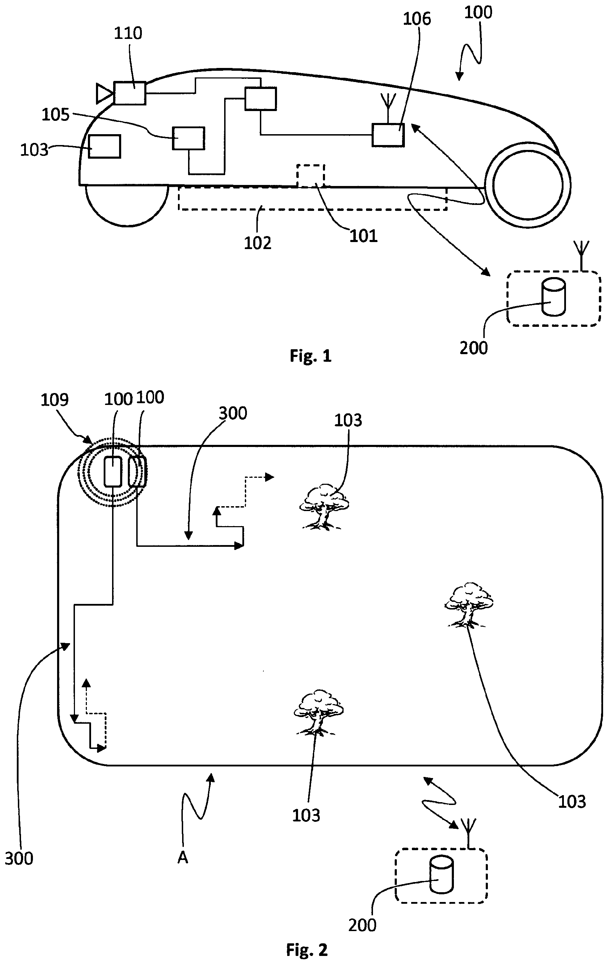

The reference numeral 100 in Figure 1 denotes an automatic lawn mower robot which is in use positioned on a lawn or grassy area defined by a surface or area A having its own delimiting perimeter, and within which there is grass to be cut together with any obstacles. The automatic lawn mower robot 100 is designed to autonomously move within the area A in order to cut the grass present in the same area. More specifically, as illustrated in Figure 2, inside the lawn area A there may be more than one lawn mower robot 100, as will be described in detail below, operating simultaneously or not.

For the purpose of this invention, the term "autonomously" means a movement substantially not guided by the user, that is to say, a movement which comprises the activation or deactivation of the movement means by a process substantially predetermined and/or updated in an autonomous manner by data processing means according to a plurality of ambient parameters autonomously acquired electronically by sensors.

The lawn mower robot 100 according to this invention comprises a movement motor 101 which allows it to be moved along a straight or curved trajectory forwards or backwards, preferably of the electrical type and powered by a battery.

The same battery also powers the cutting means 102 which typically comprise one or more blades rotating in a shared or counter-rotating fashion, positioned in contact with or close to the ground and, in detail, in such a way that the axis of rotation is substantially at right angles to the ground. The blades rotating in use cut the grass the height of which exceeds the height at which they are positioned and the convey the grass by known means towards a drum or, alternatively, they leave it deposited on the lawn itself.

The battery charge is advantageously controlled electronically in such a way as to prevent the battery draining completely before the robot has returned to the base or starting position in which the recharging unit is conveniently installed. More specifically, when a particularly low charge is detected, switching means of known type switch OFF the motor powering the cutting means 102.

More specifically, the lawn mower robot 100 according to this invention is a robot whose cutting strategy is adapted according to a plurality of external and ambient conditions, starting from a predetermined strategy which is automatically adapted over time, and is therefore a strategy variable over time. For the purpose of this invention, the movement strategy or cutting strategy means the prior programming of a movement path of one or more lawn mower robots 100 within the lawn area A, and subsequent activation of the movement means 101 in accordance with the prior programming.

For the purpose of this invention, the movement strategy variable over time or the cutting strategy variable over time means that the movement strategy or the cutting strategy is adapted automatically by data processing means according to electronic data captured in real time from sensor means, in such a way as to vary the movement path of the one or more lawn mower robots 100 relative to the movement path programmed in advance.

The automatic lawn mower robot 100 according to the invention also comprises sensor means which assist the definition of its position, as well as the detection of obstacles and allow a better operation in the strategy of mowing the lawn.

In more detail, the sensor means comprise above all contact or proximity sensors 103, positioned at least in front of the body of the lawn mower robot 100. Preferably, but without limiting the invention, the contact or proximity sensors 103 are radar sensors or impact sensors (for example, comprising mechanical switches) or Hall effect sensors (for example, comprising a mechanical part movable relative to a second fixed part, wherein the movable part of the sensor preferably comprises a magnet and the fixed part comprises a Hall effect detector; or vice versa).

These contact or proximity sensors 103 are configured to detect the presence of an obstacle which comes close to the robot during the forward movement and advantageously command the stopping in front of an obstacle. This allows a greater flexibility of use of the lawn mower robot 100, which may be used without problems in lawns with obstacles, such as, for example and without limiting the scope of the invention, plants and shrubs.

Optionally, although preferably, the contact or proximity sensors 103 are assisted or replaced by a stereoscopic video camera 110, which is designed to allow the detection of objects around the body of the lawn mower robot 100 by means of a software reading of the approach of objects.

Both the contact or proximity sensors 103 and the stereoscopic video camera 110, when present, are electrically connected to a data processing unit present on board the lawn mower robot 100. The data processing unit can be conveniently designed starting from a specifically designed general purpose processor or from a dedicated processor, or - where the technology allows it - through a FPGA, or even through a microcomputer such as, for example but without limiting the invention, a Raspberry or the like.

The data processing unit is programmed to receive the ambient data coming from the contact or proximity sensors 103 and from the stereoscopic video camera 110, if installed, and to execute a processing of the data aimed at defining a position in the area A of the obstacles detected by them. This, as described in more detail below, advantageously allows a greater flexibility and efficiency in the definition of the cutting strategy of the lawn.

Moreover, the lawn mower robot 100 according to this invention also has a control of the geographical position adopted in real time. For this reason, it comprises a localisation module 105 conveniently using a GPS/GLONASS satellite receiver which is able to allow positioning of the lawn mower robot 100 with a pair of longitude/latitude coordinates which define ambient positioning data 109 of the time-variant type, precisely on account of the movement of the robot itself in the area A.

The lawn mower robot 100 according to this invention also comprises temperature and moisture sensors 104. These sensors use a technology of known type and are also electrically connected to the data processing unit.

The lawn mower robot 100 also comprises a radio module 106, electrically connected to the data processing unit and configured for transmitting at least the ambient data indicating the presence of obstacles 107, ambient temperature and moisture data 108 and the ambient global positioning data 109 towards a remote memory unit 200, accessible preferably by means of coded communication according to prior art, in order to prevent interference. The radio module can operate with Wi-Fi technology, or even on a dedicated radio channel, with point-multipoint transmission or according to any mobile phone standard.

The automatic lawn mower robots 100 also comprise a shear force sensor. The sensor, of known type and installed on the electric cutting motor, measures the effort exerted by the electric motor (typically by the absorption of electric current) and indirectly allows the density and/or height of the lawn to be known. It has been found that by means of an instantaneous correction of the speed of forward movement of the lawn mower robot 100 according to the cutting force it is possible to achieve a better quality of mowing. This in fact occurs in particular when the forward speed of the mowing is reduced in proportion to the increase in the cutting force.

It has also been found that the optimisation of the precision in identifying the portion of area already cut inside the lawn area A, and more in detail the identification any re-passing over an area already cut, occurs by the combined and advantageous use of as many shear force sensors as there are position and/or stereoscopic video camera sensors.

The automatic lawn mower robot 100 described above is in fact introduced in a more general context of an electronic system for mowing lawns designed for allowing the coordination of several lawn mower robots 100 such as the one described above, in such a way as to automatically adapt the movement strategy.

The system, in addition to the plurality of automatic lawn mower robot 100 positioned in the area A, also comprises a remote memory unit 200 electrically connected to its own electronic processor and accessible remotely via radio from the radio module of the lawn mower robot 100.

The function of the remote memory unit 200 is to allow the computational intelligence of the strategy for cutting grass in the area A to be shifted out from the data processing units installed on board the lawn mower robot 100. This feature advantageously makes it possible to make the data processing units installed on board the lawn mower robot 100 more economic and less complex to make and program, leaving the majority of the computational duties to the electronic processor installed in the remote memory unit 200, which advantageously, but without limiting the scope of the invention, may be considered as a cloud type storage unit.

As mentioned above, the remote memory unit 200 is accessible on a wireless channel, by means of a radio modem directly connected to it or, alternatively, connected to the electronic processor associated with it.

The remote memory unit 200 stores a series of operational parameters which also comprise the ambient data gradually transmitted by the lawn mower robot 100 during its movement inside the A.

By using these operational parameters, the electronic processor associated with remote memory unit 200 processes a cutting strategy which advantageously comprises at least one path 300 to be followed by the lawn mower robot 100. The cutting strategy processed by the electronic processor associated with the remote memory unit 200 is adapted over time.

The path 300 is advantageously firstly predetermined on the basis of the shape of the perimeter of the area A, and calculated electronically by the electronic processor in such a way that two separate lawn mower robots 100 do not pass repeatedly on zones of the area A that have already been cut by another robot. Advantageously, this makes it possible to reduce the waste of time and save the electrical energy of the batteries of the robots, without using it unnecessarily for the cutting of zones of the area A where the grass has already been cut.

Preferably, but not necessarily, the path 300 which must be followed by the lawn mower robots 100 is updated over time according to the actual path followed by the other lawn mower robots 100. This may occur both whilst several lawn mower robots 100 are active in the area A at the same time and whilst one lawn mower robot 100 at a time is active in the area A.

In effect, it has been found that irrespective of the definition, more or less precise, of the area A the lawn mower robot 100 could encounter during its path the presence of obstacles not calculated. The presence of obstacles, encountered by the robot mower 100 through the plurality of sensors installed on board, is transmitted as ambient data towards the remote memory unit 200 and processed - preferably but without limiting the invention - in real time, so as to update instantaneously the path 300 that the other lawn mower robots 100 may travel along, precisely according to the presence of the obstacles. This avoids slow-downs or changes of direction or pulling back of the remaining robots, which in this way operate more efficiently.

If the lawn mower robots 100 described above are equipped with the optional localisation module 105, at least two lawn mower robots 100 may be left to operate inside the area A simultaneously with a further reduction in the risk that they could strike each other. This is true in particular if the lawn mower robots 100 are controlled in real time through the remote memory unit 200, which updates at set times the cutting strategy for the two lawn mower robots 100 according to any variations in the cutting strategy with respect to that originally defined, and namely according to the presence of obstacles detected by the robots or slow-downs or bends, or deviations from the theoretical mowing speed due to zonal increases in the cutting force.

The temperature data collected by the remote memory unit 200 advantageously allow checking if the conditions exist to be able to perform the cutting, and namely if:
- there is an excessive moisture, greater than a predetermined threshold value, such that even a previously programmed cutting cannot be performed; or
- if the temperature for cutting the grass is optimum, and, if it is not, it is advantageously possible to check and delay the cutting of the grass in the area A without intervention by the user.

In a preferred, non-limiting embodiment of the invention, the method for controlling the operation of more than one lawn mower robot 100 might be performed as follows:
- in a first step (block 1000, block 1001), the cutting strategy, defined preferably starting from the perimeter of the area A and from the position adopted by the lawn mower robots 100 on the area A, is loaded in the remote memory 200 using the electronic processor;
- at this point (block 1002) the lawn mower robots 100 are powered up and start to cut the grass of the various zones of the area A with their cutting means 102 following a predetermined path 300 on the basis of the cutting strategy decided in the first step;
- as the lawn mower robots 100 gradually carry out the cutting, they send ambient data (block 1003) towards the remote memory unit 200 which decides whether to modify the cutting strategy (block 1004);
- if the cutting strategy is modified, the new data for controlling the motors of the various lawn mower robots 100 is sent towards the latter, and the data is received and processed by them through the respective radio modules 106 and data processing unit, so as to move to a new path (block 1005).

The cycle of sending ambient data and if necessary modifying the cutting strategy is repeated (block 1006, arrow 1007) until the entire area A has been cut (block 1008), after which the lawn mower robots 100 are stopped in a consonant manner and, preferably but without limiting the invention, returned to the battery recharging station so that they can be again ready for use at a later time.

The advantages of the method for controlling automatic lawn mowers according to the invention is clear in light of the above description. By controlling and progressively updating the position of two or more automatic lawn mower robots as described above it is possible to optimise the time taken in cutting the grass in the predetermined area A, avoiding an unnecessary waste of time and energy in repassing a second lawn mower robot over a zone of the area A wherein the lawn has already been cut.

The presence of sensor means of the ambient conditions advantageously allows the cutting strategy to be optimised not only in accordance to the position of the robots in the area A, but also in accordance with the ambient conditions detected at the particular moment, making it possible, for example, to interrupt or delay the cutting of all or part of the area A precisely accordance with the ambient conditions automatically detected, so that the effectiveness in terms of cutting capacity and the result of the cutting, also in terms of health of the lawn, can be optimised automatically without the intervention of the user. Finally, it is clear that the system according to this invention may be modified, added to or adapted in ways obvious to technicians in the field, without thereby departing from the protective scope of the appended claims.

## Claims

1. An electronic system comprising a remote memory unit (200) and a plurality of lawn mower robots (100) remotely accessing the remote memory unit (200), each lawn mower robot (100) comprising:
- at least one electric motor (101) designed to allow the movement of the robot in a substantially automatic manner;
- grass cutting means (102), positioned in a position substantially in contact in use with a turf to be cut; and
- a plurality of sensors (103, 104, 110) comprising:
contact or proximity sensors (103) fixed on the body of the lawn mower robot (100) and designed to identify the presence of obstacles around the lawn mower robot (100), and
- shear force sensors, installed on the electric motor (101 arranged to measure the effort exerted by the electric motor and allow density and/or height of the lawn to be known;
- a localisation module (105), allowing the geographical localisation of the lawn mower robot (100) inside an area (A) by the acquisition of position data (109), the localisation module (105) being electronically interfaced with the at least one motor (101) and selectively controlling the switching ON and OFF of the electric motor (101); and
- moisture and/or temperature sensor means (104) arranged to measure ambient temperature and moisture data; and
- a data transceiver module (106), designed to allow the sending of ambient data (107, 108, 109),
wherein the ambient data comprises obstacle (107), ambient temperature and moisture data (108) and position data (109) acquired electronically by said plurality sensors (103, 104, 110) and the localisation module (105), towards the remote memory unit (200);
and wherein the remote memory unit comprises with means to compute a movement strategy for moving the plurality of lawn mower robots (100); wherein the movement strategy is defined at least according to combined parameters stored in the remote memory unit (200) and the ambient data (107, 108, 109) and the position data acquired autonomously by each of the lawn mower robot (100) in the area (A);
wherein the movement strategy is automatically updated over time according to the plurality of parameters, and automatically re-transmitted towards the plurality of lawn mower robots (100).

2. The electronic system according to claim 1, wherein an extension and/or coordinates of at least part of a perimeter of the area (A) is previously stored in the remote memory unit (200).

3. The electronic system according to claim 1, wherein inhibiting areas inside a perimeter of the area (A) are stored in the remote memory unit (200), the inhibiting areas being:
- loaded in the remote memory (200) manually, and/or
- progressively stored in accordance with the plurality of ambient data (107, 108, 109).

4. The electronic system according to any of the previous claim,
wherein the lawn mower robot (100) activates the electric motor (101) to move on the area (A) according to the movement strategy defined at least according to said ambient data (107, 108, 109), according to combined parameters stored in the remote memory unit (200) and according to the position adopted in the area (A) by the other lawn mower robots (100).

5. The electronic system according to claim 4, wherein the movement strategy is variable over time.

6. The electronic system according to claim 5, **characterised in that** the localisation module (105) comprises satellite global positioning means, and wherein the ambient data (109) comprise global positioning data comprising global latitude and longitude data.

7. The electronic system according to claim 4, wherein the plurality of sensor means (103, 104, 110) also comprise a stereoscopic video camera (110).

8. A method for automatically controlling a plurality of lawn mower robots (100) inside an area (A), the plurality of lawn mower robots (100) presenting the features according to one or more of the claims 1-7;
the method comprising a step of storing combined parameters in a remote memory (200), remotely accessible by the plurality of the lawn mower robots (100) and
a step for transmitting at least part of the combined parameters from the remote memory (200) towards one or more of the lawn mower robots (100),
and wherein a strategy for moving the plurality of automatic lawn mower robots (100) in the area (A) consists in:
- identifying the presence of obstacles around each of the lawn mower robot (100);
- shear force sensors in order to measure the effort exerted by the electric motor and to allow density and/or height of the lawn to be known;
- acquiring position data (109) in order to localize the lawn mower robot (100) inside the area (A) by means of an electronical interface with the at least one motor (101) and through a selectively control of the switching ON and OFF of the electric motor (101);
- measuring the ambient temperature and moisture of the area (A);
- sending the ambient data (107, 108, 109) of the area (A), wherein the ambient data comprises obstacle (107), ambient temperature and moisture data (108) and position data (109);
- computing a movement strategy for moving the plurality of lawn mower robots (100), said movement strategy being defined at least according to combined parameters stored in the remote memory unit (200) and the ambient data (107, 108, 109) and the position data acquired autonomously by each of according to a position datum (109) adopted by the lawn mower robot (100) in the area (A).

9. The method according to claim 8, wherein the combined parameters comprise at least a definition of at least one sub-area of inhibiting inside the perimeter of the area (A), and wherein the at least one sub-area of inhibiting is loaded in the remote memory (200) with:
- a step for manual definition by the user using an electronic device electronically accessing the memory unit; and/or
- a step of progressive storage in accordance with the plurality of ambient data (107, 108, 109).

## Patentansprüche

1. Elektronisches System, umfassend eine Fernspeichereinheit (200) und eine Vielzahl von Rasenmäherrobotern (100), die im Fernmodus auf die Fernspeichereinheit (200) zugreifen, wobei ein jeder Rasenmäherroboter (100) Folgendes umfasst:
- mindestens einen elektrischen Motor (101), der ausgestaltet ist, um die Bewegung des Roboters auf eine im Wesentlichen automatische Weise zu erlauben;
- Grasschneidemittel (102), die in einer Position positioniert sind, die im Wesentlichen in Verwendung in Kontakt mit einer zu schneidenden Grasnarbe ist, und
- eine Vielzahl von Sensoren (103, 104, 110), umfassend:
Kontakt- oder Näherungssensoren (103), die am Körper des Rasenmäherroboters (100) fixiert und ausgestaltet sind, um die Anwesenheit von Hindernissen rund um den Rasenmäherroboter (100) zu identifizieren, und
- Scherkraftsensoren, die auf dem elektrischen Motor (101) installiert und angeordnet sind, um die vom elektrischen Motor ausgeübte Kraft zu messen und die erlauben, die Dichte und/oder Höhe des zu mähenden Rasens zu kennen;
- ein Lokalisierungsmodul (105), das die geografische Verortung des Rasenmäherroboters (100) innerhalb einer Fläche (A) durch die Erfassung von Positionsdaten (109) erlaubt, wobei das Lokalisierungsmodul (105) elektronisch mit dem mindestens einen Motor (101) gekoppelt ist und das Ein- und Ausschalten (EIN/AUS) des elektrischen Motors (101) selektiv steuert, sowie
- Feuchtigkeits- und/oder Temperatursensormittel (104), die angeordnet sind, um Umgebungstemperatur- und Feuchtigkeitsdaten zu messen, und
- ein Daten-Sende-/Empfangsmodul (106), das ausgestaltet ist, um das Senden von Umgebungsdaten (107, 108, 109) an die Fernspeichereinheit (200) zu erlauben,
wobei die Umgebungsdaten Daten in Bezug auf Hindernisse (107), Umgebungstemperatur- und Feuchtigkeitsdaten (108) sowie Positionsdaten (109) umfassen, die elektronisch von der Vielzahl von Sensoren (103, 104, 110) und dem Lokalisierungsmodul (105) erfasst werden,
und wobei die Fernspeichereinheit Mittel umfasst, um eine Bewegungsstrategie zum Bewegen der Vielzahl von Rasenmäherrobotern (100) zu berechnen,
wobei die Bewegungsstrategie zumindest gemäß kombinierten Parametern, die in der Fernspeichereinheit (200) gespeichert sind, und den Umgebungsdaten (107, 108, 109) und den autonom von einem jeden Rasenmäherroboter (100) in der Fläche (A) erfassten Positionsdaten definiert wird,
wobei die Bewegungsstrategie automatisch mit der Zeit gemäß der Vielzahl von Parametern aktualisiert und automatisch wieder an die Vielzahl von Rasenmäherrobotern (100) übermittelt wird.

2. Elektronisches System nach Anspruch 1, wobei eine Ausdehnung und/oder Koordinaten von mindestens einem Teil eines Umfangs der Fläche (A) im Vorfeld in der Fernspeichereinheit (200) gespeichert werden.

3. Elektronisches System nach Anspruch 1, wobei Hemmflächen innerhalb eines Umfangs der Fläche (A) in der Fernspeichereinheit (200) gespeichert werden, wobei die Hemmflächen
- manuell in den Fernspeicher (200) geladen werden und/oder
- im Einklang mit der Vielzahl von Umgebungsdaten (107, 108, 109) progressiv gespeichert werden.

4. Elektronisches System nach einem der vorhergehenden Ansprüche,
wobei der Rasenmäherroboter (100) den elektrischen Motor (101) aktiviert, um sich auf der Fläche (A) gemäß Bewegungsstrategie zu bewegen, die zumindest gemäß den Umgebungsdaten (107, 108, 109), gemäß den in der Fernspeichereinheit (200) gespeicherten kombinierten Parametern und gemäß der in der Fläche (A) von den anderen Rasenmäherrobotern (100) eingenommenen Position definiert ist.

5. Elektronisches System nach Anspruch 4, wobei die Bewegungsstrategie mit der Zeit variabel ist.

6. Elektronisches System nach Anspruch 5, **dadurch gekennzeichnet, dass** das Lokalisierungsmodul (105) Mittel für die globale Positionsbestimmung per Satellit umfasst, und wobei die Umgebungsdaten (109) globale Positionsbestimmungsdaten einschließlich globaler Breiten- und Längendaten umfassen.

7. Elektronisches System nach Anspruch 4, wobei die Vielzahl von Sensormitteln (103, 104, 110) auch eine stereoskopische Videokamera (110) umfassen.

8. Verfahren zur automatischen Steuerung einer Vielzahl von Rasenmäherrobotern (100) in einer Fläche (A), wobei die Vielzahl von Rasenmäherrobotern (100) die Merkmale nach einem oder mehreren der Ansprüche 1-7 aufweisen,
wobei das Verfahren einen Schritt zum Speichern kombinierter Parameter in einem Fernspeicher (200) umfasst, im Fernmodus abrufbar von der Vielzahl von Rasenmäherrobotern (100), und
einen Schritt zum Übermitteln von mindestens einem Teil der kombinierten Parameter vom Fernspeicher (200) an einen oder mehrere Rasenmäherroboter (100),
und wobei eine Strategie zum Bewegen der Vielzahl von automatischen Rasenmäherrobotern (100) in der Fläche (A) aus Folgendem besteht:
- Identifizieren der Anwesenheit von Hindernissen rund um einen jeden der Rasenmäherroboter (100);
- Scherkraftsensoren, um die vom elektrischen Motor ausgeübte Kraft zu messen und um zu erlauben, dass Dichte und/oder Höhe des Rasens bekannt sind;
- Erfassen von Positionsdaten (109), um den Rasenmäherroboter (100) in der Fläche (A) mittels einer elektronischen Schnittstelle mit dem mindestens einen Motor (101) und durch eine selektive Steuerung des Ein- und Ausschaltens (EIN/AUS) des elektrischen Motors (101) zu verorten;
- Messen der Umgebungstemperatur und der Feuchtigkeit der Fläche (A);
- Senden der Umgebungsdaten (107, 108, 109) der Fläche (A), wobei die Umgebungsdaten Daten in Bezug auf Hindernisse (107), Umgebungstemperatur- und Feuchtigkeitsdaten (108) sowie Positionsdaten (109) umfassen;
- Berechnen einer Bewegungsstrategie zum Bewegen der Vielzahl von Rasenmäherrobotern (100), wobei die Bewegungsstrategie zumindest gemäß den in der Fernspeichereinheit (200) gespeicherten kombinierten Parametern und den Umgebungsdaten (107, 108, 109) und den von einem jedem gemäß einem vom Rasenmäherroboter (100) in der Fläche (A) eingenommenen Positionswert (109) autonom erfassten Positionsdaten definiert wird.

9. Verfahren nach Anspruch 8, wobei die kombinierten Parameter zumindest eine Definition von mindestens einer Hemmunterfläche im Umfang der Fläche (A) umfassen, und wobei die mindestens eine Hemmunterfläche in den Fernspeicher (200) geladen wird mit
- einem Schritt zur manuellen Definition durch den Nutzer unter Nutzung einer elektronischen Vorrichtung, die elektronisch auf die Speichereinheit zugreift, und/oder
- einem Schritt zur progressiven Speicherung im Einklang mit der Vielzahl von Umgebungsdaten (107, 108, 109).

## Revendications

1. Système électronique, comprenant une unité de mémoire distante (200) et plusieurs robots de tondeuse (100) accédant à distance à l'unité de mémoire distante (200), chaque robot de tondeuse (100) comprenant :
- au moins un moteur électrique (101) conçu pour permettre le déplacement du robot de manière sensiblement automatique ;
- un dispositif de coupe de l'herbe (102), placé dans une position substantiellement en contact, en cours d'utilisation, avec un gazon à tondre ; et
- une pluralité de capteurs (103, 104, 110), comprenant :
des capteurs de contact ou de proximité (103) fixés sur le corps du robot de tondeuse (100) et conçus pour identifier la présence d'obstacles autour du robot de tondeuse (100), et
- des capteurs de force de tonte, installés sur le moteur électrique (101 agencé pour mesurer l'effort exercé par le moteur électrique et permettre de connaître la densité et/ou la hauteur de la pelouse ;
- un module de localisation (105), permettant la localisation géographique du robot de tondeuse (100) à l'intérieur d'une zone (A) par l'acquisition de données de position (109), le module de localisation (105) étant interfacé électroniquement avec l'au moins un moteur (101) et commandant sélectivement la mise en marche et l'arrêt du moteur électrique (101) ; et
- des moyens de détection de l'humidité et/ou de la température (104) conçus pour mesurer la température ambiante et les données relatives à l'humidité ; et
- un module émetteur-récepteur de données (106), conçu pour permettre l'envoi de données ambiantes (107, 108, 109),
dans lequel les données ambiantes comprennent des données d'obstacle (107), de température ambiante et d'humidité (108) et des données de position (109) acquises électroniquement par ladite pluralité de capteurs (103, 104, 110) et le module de localisation (105), à l'unité de mémoire distante (200) ;
et dans lequel l'unité de mémoire distante comprend un moyen de calculer une stratégie de mouvement pour déplacer la pluralité de robots de tondeuse (100) ;
dans lequel la stratégie de déplacement est définie au moins en fonction des paramètres combinés stockés dans l'unité de mémoire distante (200), des données ambiantes (107, 108, 109) et des données de position acquises de manière autonome par chacun des robots de tondeuse (100) dans la zone (A) ;
dans lequel la stratégie de déplacement est automatiquement mise à jour dans le temps en fonction de la pluralité de paramètres, et automatiquement retransmise à la pluralité de robots de tondeuse (100).

2. Système électronique selon la revendication 1, dans lequel une extension et/ou des coordonnées d'au moins une partie d'un périmètre de la zone (A) sont préalablement stockées dans l'unité de mémoire distante (200) .

3. Système électronique selon la revendication 1, dans lequel des zones d'inhibition à l'intérieur d'un périmètre de la zone (A) sont stockées dans l'unité de mémoire distante (200), les zones d'inhibition étant :
- chargées manuellement dans la mémoire distante (200), et/ou
- stockées progressivement en fonction de la pluralité de données ambiantes (107, 108, 109).

4. Système électronique selon l'une quelconque des revendications précédentes,
dans lequel le robot de tondeuse (100) active le moteur électrique (101) pour se déplacer sur la zone (A) selon la stratégie de déplacement définie au moins selon lesdites données ambiantes (107, 108, 109), selon des paramètres combinés stockés dans l'unité de mémoire distante (200) et selon la position adoptée dans la zone (A) par les autres robots de tondeuse (100).

5. Système électronique selon la revendication 4, dans lequel la stratégie de mouvement est variable dans le temps.

6. Système électronique selon la revendication 5, **caractérisé en ce que** le module de localisation (105) comprend des moyens de positionnement global par satellite, et dans lequel les données ambiantes (109) comprennent des données de positionnement global comprenant des données de latitude et de longitude globales.

7. Système électronique selon la revendication 4, dans lequel la pluralité de moyens de détection (103, 104, 110) comprend également une caméra vidéo stéréoscopique (110) .

8. Procédé pour commander automatiquement une pluralité de robots de tondeuse (100) à l'intérieur d'une zone (A), la pluralité de robots de tondeuse (100) présentant les caractéristiques selon une ou plusieurs des revendications 1 à 7 ;
le procédé comprenant une étape de stocker des paramètres combinés dans une mémoire distante (200), accessible à distance par la pluralité de robots de tondeuse (100) et une étape pour transmettre au moins une partie des paramètres combinés de la mémoire distante (200) à un ou plusieurs robots de tondeuse (100),
et dans lequel une stratégie pour déplacer la pluralité de robots de tondeuse automatiques (100) dans la zone (A) consiste à :
- identifier la présence d'obstacles autour de chaque robot de tondeuse (100) ;
- des capteurs de force de tonte afin de mesurer l'effort exercé par le moteur électrique et de permettre de connaître la densité et/ou la hauteur de la pelouse ;
- acquérir des données de position (109) afin de localiser le robot de tondeuse (100) à l'intérieur de la zone (A) au moyen d'une interface électronique avec l'au moins un moteur (101) et à travers une commande sélective de la mise en marche et de l'arrêt du moteur électrique (101) ;
- mesurer la température ambiante et l'humidité de la zone (A) ;
- envoyer les données ambiantes (107, 108, 109) de la zone (A), dans lequel les données ambiantes comprennent des données d'obstacle (107), de température ambiante et d'humidité (108) et des données de position (109) ;
- calculer une stratégie de mouvement pour déplacer la pluralité de robots de tondeuse (100), ladite stratégie de mouvement étant définie au moins selon des paramètres combinés stockés dans l'unité de mémoire distante (200) et des données ambiantes (107, 108, 109) et des données de position acquises de manière autonome par chacun d'entre eux selon une donnée de position (109) adoptée par le robot de tondeuse (100) dans la zone (A).

9. Procédé selon la revendication 8, dans lequel les paramètres combinés comprennent au moins une définition d'au moins une sous-zone d'inhibition à l'intérieur du périmètre de la zone (A), et dans lequel au moins une sous-zone d'inhibition est chargée dans la mémoire distante (200) avec :
- une étape pour la définition manuelle par l'utilisateur utilisant un dispositif électronique accédant électroniquement à l'unité de mémoire ; et/ou
- une étape de stockage progressif selon la pluralité de données ambiantes (107, 108, 109).
